# EUROPEAN PATENT SPECIFICATION

(11) **EP 2 204 810 B1**
(45) Date of publication and mention of the grant of the patent: **29.06.2016**
(21) Application number: 08843883.3
(22) Date of filing: 29.09.2008
(51) Int. Cl.: G11B 27/10, G11B 19/02, G11B 20/00, G10L 19/16, G11B 20/10, G11B 27/34, G11B 27/034

(54) **REPRODUCING DEVICE AND REPRODUCING METHOD**
WIEDERGABEVORRICHTUNG UND WIEDERGABEVERFAHREN
DISPOSITIF DE REPRODUCTION ET PROCÉDÉ DE REPRODUCTION

(30) Priority: 02.11.2007 JP 2007286154
(43) Date of publication of application: 07.07.2010
(73) Proprietor: inMusic Brands, Inc., Cumberland, RI 02864 (US)
(72) Inventor: ONIZUKA, Kazuhiro, Kawasaki-shi Kanagawa 210-8569 (JP); TAMURA, Haruyuki, Kawasaki-shi Kanagawa 210-8569 (JP)
(74) Representative: Finnegan Europe LLP
(86) International application number: PCT/JP2008/067622
(87) International publication number: WO 2009/057401

(56) References cited:
- EP-A1- 0 977 200
- WO-A2-2004/090871
- JP-A- 7 085 599
- JP-A- 2002 236 580
- Anonymous: "User Manual for Mvix MX-760HD Wireless Media Center", mvixusa.com , 29 November 2006 (2006-11-29), pages 1-47, XP002633784, Retrieved from the Internet: URL:http://www.mvixusa.com/support/index.p hp?_m=downloads&_a=viewdownload&downloadit emid=13&nav=0,29,36 [retrieved on 2011-04-20]

## Description

### Technical Field

The present invention relates to a technology capable of reproducing a file stored in an internal and/or external storage medium and output ting the file to a plurality of systems substantially at the same time.

### Background Art

There is a reproducing device used by a disc jockey (hereinafter, referred to as "DJ") or the like who provides music in a club or the like. The DJ or the like uses the reproducing device to give special effects to music tracks stored in a storage medium for their presentations.

In recent years, it has become more general to save a large number of music tracks to internal and external storage media such as a hard disk and a flash memory. Some reproducing devices used by the DJ or the like have a hard disk built therein and are connectable to a removable external storage medium. An example thereof is described by product information: iCDX, Numark Industries, LLC. the Internet (URL: http://www.numark.jp/pdf/specs/iCDX_Product_Overview_JP.pdf), retrieved on October 17, 2007. By using this reproducing device, the DJ or the like can realize desired presentations using a large number of music tracks saved in the internal and external storage media.

In general, the DJ or the like connects two reproducing devices to a mixer, and reproduces music tracks in an alternate or mixed manner. Therefore, even if a large number (large library) of music tracks are saved in the internal or external storage medium of the reproducing device, there is a problem in sharing the library for simultaneous or continuous use thereof.

That is, data saved in the external storage medium connected through a universal serial bus (USB), for example, cannot be reproduced simultaneously between different reproducing devices with a normal configuration. This can be made possible by using a special USB controller or the like, which, however, increases production costs for the reproducing devices.

Meanwhile, data on music tracks saved in the internal storage medium (such as a hard disk) can be shared by transferring the music track data to another reproducing device. However, in a so-called "DJ play" for performing fast-forward reproduction or the like in real time, a certain amount (for example, for 30 seconds) of data needs to be accumulated, and if a transfer waiting time exists, a user's operability is extremely lowered, which may hinder practical use.

User Manual for Mvix MX-760HD Wireless Media Centre is a user manual for the Mvix Wireless Hi-Definition Multimedia Player.

WO 2004/090871 A2 discloses a combination and player system (10) that includes a recorder/player unit (12) and a remote control unit (14). The recorder/player unit includes a recorder/player computer system (16) and recorder/player software (34) that is operable to cause the recorder/player to record, play and burn CDs. The remote control unit includes a remote control computer system (36) and remote control software (52) that can be used to control the recorder/player unit. The system can be used to automatically copy all of the audio on CDs into memory on the recorder/player, to control multiple pieces of audio and video equipment, and to download and store new music from the Internet.

EP0977200 A1 discloses that when a copy of music data recorded in an HDD to another electronic equipment is instructed, whether an accounting process is performed or a sound quality deteriorating process is performed is selected. When the accounting process is performed, after a predetermined accounting procedure was performed, a data copying process is performed and the data is outputted to a copy destination. When the accounting process is performed, a quality of the data is held to be almost identical to that of the original data. When the sound quality deteriorating process is selected, a data conversion is performed by a predetermined sound quality deteriorating process, the quality of the data is deteriorated, and the deteriorated data is outputted to the copy destination. In this case, the accounting is not performed. In case of the move of the data, the accounting process and the sound quality deteriorating process are not performed.

### Summary of the Invention

In view of the above-mentioned circumstances, an object of the present invention is to solve the problems involved in the above-mentioned conventional technology.

The present invention provides a first reproducing device as set out in claim 1 and a reproducing method as set out in claim 6.

### Brief Description of the Drawings

[FIG. 1] FIG. 1 is a block diagram illustrating a. configuration of a reproducing device according to an embodiment of the present invention.
[FIG. 2] FIG. 2 is a diagram illustrating an example in which reproducing devices according to the embodiment of the present invention are connected to a mixer.
[FIG. 3] FIG. 3 is a diagram illustrating a processing flow of the reproducing devices according to the embodiment of the present invention.
[FIG. 4] FIG. 4 is a diagram illustrating an example of a connection according to another embodiment of the present invention.

### Best Mode for carrying out the Invention

Hereinafter, detailed description is made of an embodiment of the present invention with reference to the accompanying drawings. Note that the embodiment described below is a mere example, and the present invention is not limited thereto.

A reproducing device according to this embodiment described below enables an operator such as a DJ to freely reproduce digital audio files recorded on a hard disk or the like, and is appropriately usable in, for example, a club, a studio, or a home party.

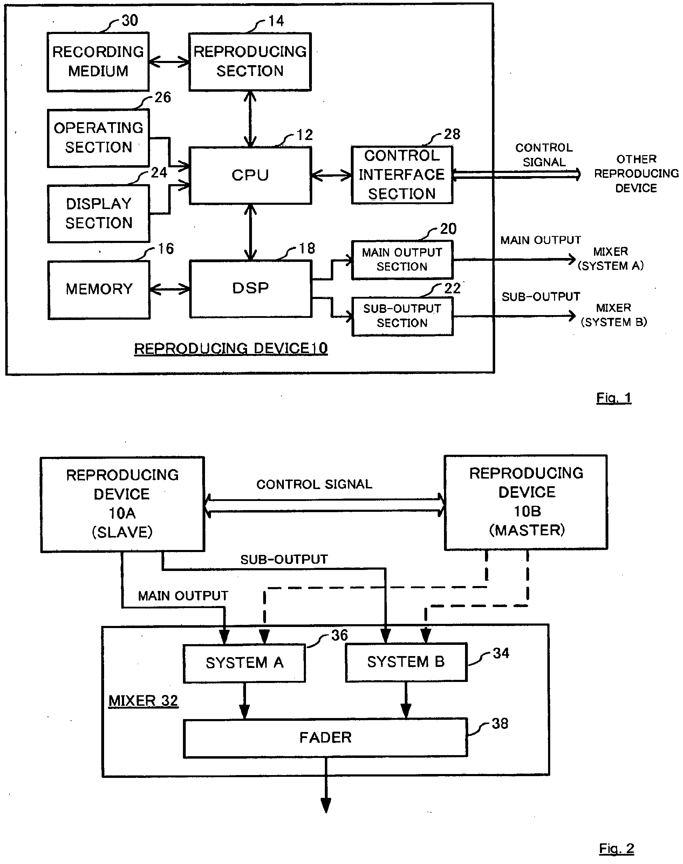

FIG. 1 illustrates a configuration of the reproducing device according to the embodiment of the present invention. A reproducing device 10 illustrated in FIG. 1 includes a central processing unit (CPU) 12, a reproducing section 14, a memory 16, a digital signal processor (DSP) 18, a main output section 20, a sub-output section 22, a display section 24, an operating section 26, and a control interface section 28.

The CPU 12 centrally controls an operation of the reproducing device 10.

The reproducing section 14 reads and reproduces a digital audio data file stored in an internal and/or external storage medium 30. Examples of the storage medium 30 include a hard disk, a silicon memory, an optical disc (such as compact disc (CD) or digital versatile disc (DVD)), and a memory card/stick. The reproducing section 14 is provided with a reading mechanism corresponding to the storage medium 30 to be reproduced, and in a case where the reproducing section 14 is connected to the external storage medium, includes a connection interface such as a USB interface.

The audio file may be of any format selected from the group consisting of Moving Picture Experts group audio layer 3 (MP3), audio interchange file format (AIFF), word audio video (WAV), musical instruments digital interface (MIDI), and other such formats. The reproducing section 14 subjects the audio file to a decoding processing or the like and outputs the audio file.

The memory 16 temporarily stores the digital audio signal read by the reproducing section 14. The memory 16 has a capacity capable of accumulating, for example, 30 seconds of data for each of outputs to two systems described later.

The DSP 18 controls writing of data reproduced from the reproducing section 14 to the memory 16, and manages memory addresses of the memory 16. The DSP 18 subjects the data read from the memory 16 to a waveform processing or the like and outputs the data. In addition, the DSP 18 reads audio data stored in the memory 16 in the order of addresses specified by the CPU 12 at a speed specified thereby.

Under the control of the CPU 12, the DSP 18 can read arbitrary audio files stored in the storage medium 30 substantially simultaneously. For example, under the control of the CPU 12, the DSP 18 can separately read two different audio files stored in the storage medium 30, and can output the audio files to the two systems. For each of the systems, the DSP 18 performs management of the memory 16, writing/reading of the data, the waveform processing, and the like.

The main output section 20 and the sub-output section 22 include a main external output terminal (not shown) and a sub-external output terminal (not shown), respectively, and separately output the audio data for one or two systems which has been read from the memory 16 by the DSP 18. The main output section 20 and the sub-output section 22 each include a digital to analog converter (DAC), and converts digital data into analog data. If an output destination can receive the digital data, there is no need to perform conversion thereof into the analog data.

As described later, data is output from the main output section 20 based on an operation input from the operating section 26. Data is output from the sub-output section 22 based on a control signal from another device. The outputs from the main output section 20 and the sub-output section 22 are input to different systems of a mixer, for example. When the control signal is not received, the data is output only from the main output section 20.

The display section 24 is constructed of a liquid crystal display device and the like. The display section 24 displays information necessary for an operation such as a reproduction time of a currently-reproduced track, chapter, or file and the content of the operation. In addition, as described later, the display section 24 displays various information in a remote control mode of the reproducing device 10.

The operating section 26 includes an operation panel provided with operation buttons and the like, and receives an operation input from a user. The operation panel is provided with a jog dial and the like to allow the user to perform a special reproduction operation such as fast-forward/fast-rewind, scratch, or pitch bend. The CPU 12 controls the reading from the memory 16, the waveform processing, or the like according to the user's operation through the operating section 26. In addition, as described later, keys (not shown) for switching, for example, on/off of the remote control mode are located on the operating section 26.

The control interface section 28 includes a general-purpose serial interface of recommended standard 232 version C (RS-232C) or other such format, and constitutes a transmission/reception interface for a serial control signal. The control interface section may be constructed based on Ethernet (registered trademark), USB, or other such standard. The control interface section 28 is provided with a D-sub 9 pin port or the like, and is connected to another reproducing device having the same configuration as the reproducing device 10 according to this embodiment via a cable.

The CPU 12 controls the control interface section 28 to establish or disconnect a connection to another reproducing device. Further, in this embodiment, the CPU 12 receives a command from another reproducing device via the control interface section 28, and performs operation control according to the command. That is, the reproducing device 10 according to this embodiment is configured so as to be remotely controllable. The reproducing device 10 can receive an instruction input directly through the operation of its own operating section 26, and also can receive an instruction input by remote control.

On the other hand, the reproducing device 10 can remotely control another reproducing device via the control interface section 28. That is, by connecting two reproducing devices 10 according to this embodiment to each other, one of the two may be used for the remote control.

FIG. 2 illustrates an example in which reproducing devices 10A and 10B according to this embodiment are connected to a mixer 32. The mixer 32 has two input systems (system A 34 and system B 36), and performs an output by switching or mixing outputs from the respective systems by a fader 38.

In FIG. 2, the output (main output) from the main output section 20 of the reproducing device 10A is input to the system A 34 of the mixer 32, while the output (sub-output) from the sub-output section 22 thereof is input to the system B 36 of the mixer 32.

The reproducing device 10B can be directly connected to the mixer 32 in the same manner as the reproducing device 10A, but is not connected to the mixer 32 in the example illustrated in FIG. 2, and is only serially connected to the reproducing device 10A. The reproducing device 10A and the reproducing device 10B are connected to each other by approximately 3 meters of cable, and located at positions that facilitate the user's operation. The reproducing device 10B can send the control signal regarding reproduction or the like of the audio signal on the reproducing device 10A to the reproducing device 10A, and can receive screen information or the like indicating an operation state from the reproducing device 10A. That is, the reproducing device 10A and the reproducing device 10B may be referred to as a "slave" to be controlled and a controlling "master", respectively.

In the configuration illustrated in the figure, the user operates the reproducing device 10A to select and reproduce an audio file stored in the storage medium 30 of the reproducing device 10A, and causes the audio file to be output (main output) to the mixer 32. Meanwhile, the user operates the reproducing device 10B to reproduce another audio file stored in the storage medium 30 of the reproducing device 10A, and causes the audio file to be output (sub-output) to the mixer 32. The operation performed for the reproducing device 10B is sent to the reproducing device 10A serially connected thereto as a control command, and if the reproducing device 10A judges that the control command has been issued from the reproducing device 10B, a processing related to the sub-output is performed.

Further, the reproducing device 10B acquires the operation state of the reproducing device 10A, information (including a time code and metadata) on the audio file, and the like from the reproducing device 10A, and displays the acquired information on a display device (not shown).

With such a configuration, by operating the reproducing device 10B, the user can reproduce an arbitrary audio file stored in the storage medium 30 of the reproducing device 10A substantially simultaneously in a desired manner. That is, with regard to the reproduction of an audio file group (library) stored in the storage medium 30 of the reproducing device 10A, it is possible to artificially realize the same operation sensation as that felt in the reproduction on the reproducing device 10B itself. In this remote control, the audio data is processed only by the reproducing device 10A without being transferred to the reproducing device 10B. Therefore, the user's operability is not impaired by a transfer waiting time for the audio data between the reproducing device 10A and the reproducing device 10B.

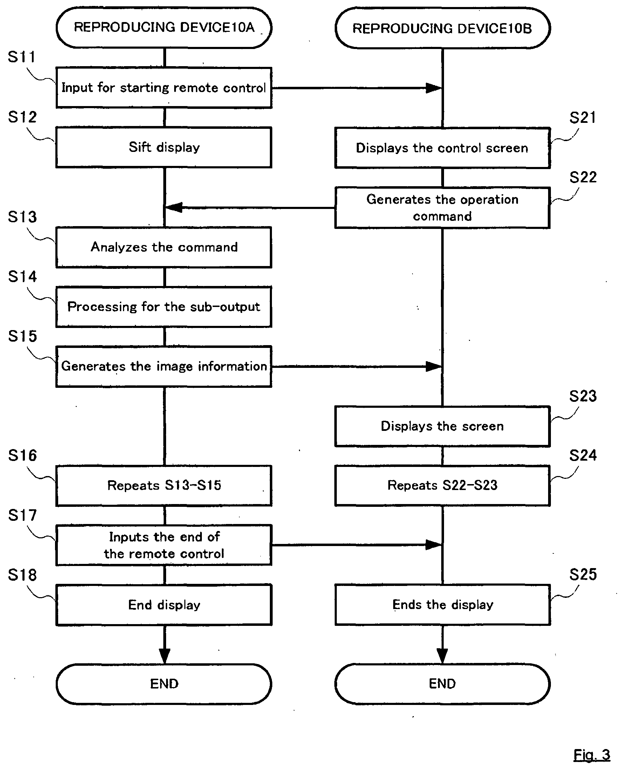

Hereinafter, by referring to the accompanying drawing, description is made of an operation flow followed when the reproducing device 10A is remotely controlled by the reproducing device 10B in the above-mentioned example. FIG. 3 is a diagram illustrating an example of the operation flow of the reproducing device 10A and the reproducing device 10B connected serially to each other.

First, in order to start the remote control, the user performs an input for starting remote control of the reproducing device 10A serving as a slave (Step S11). The reproducing device 10A is provided with, for example, a key for starting and ending the remote control, on/off thereof causes an input for a shift to the remote control mode and an end thereof.

Upon reception of the input for the start of the remote control, the reproducing device 10A establishes a connection to the reproducing device 10B. Specifically, the reproducing device 10A first sends a connection check command, and the reproducing device 10B returns a connection check response. Subsequently, the reproducing device 10A sends a connection request command, and the reproducing device 10B returns a connection request response. Accordingly, a data connection between the reproducing device 10A and the reproducing device 10B is established. Note that an instruction for the start/end of the remote control may be sent from the reproducing device 10B, or the remote control may be started when an input is performed on one of the two.

After the connection is established, the reproducing device 10A performs display indicating that a shift to the remote control mode has been made (Step S12). After that, the reproducing device 10A can perform normal reproduction (main output) for directly receiving an operation from the user via the operation interface of the reproducing device 10A.

Further, the reproducing device 10A generates operation screen information to be displayed on the reproducing device 10B and sends the operation screen information to the reproducing device 10B, and the reproducing device 10B displays thereon a screen for the remote control (Step S21).

After that, the user can control the reproduction (sub-output) of the reproducing device 10A by using the operation interface (such as a jog dial) of the reproducing device 10B serving as a master.

On the reproducing device 10B, an operation command is generated according to the user's operation and sent to the reproducing device 10A (Step S22). The reproducing device 10A analyzes the command, and according thereto, performs a predetermined processing for the sub-output. Further, the reproducing device 10A generates image information to be displayed in the processing and sends the image information to the reproducing device 10B (Steps S13 to S15), and the reproducing device 10B displays thereon a remote operation screen for the reproducing device 10A (Step S23). In the remote control mode, those processings are repeated (Step S16 and Step S24).

For example, the user views the screen displayed on the reproducing device 10B in the remote control mode, and selects a medium (for example, hard disk) to be reproduced on the reproducing device 10A. Subsequently, a list of audio files or playlists saved in the selected medium is displayed on the reproducing device 10B, and the user selects a desired file or a desired list therefrom. The selected input is sent from the reproducing device 10B to the reproducing device 10A, and the selected file or the like is output from the sub-output of the reproducing device 10A. At the same time, the screen information on the sub-output is sent from the reproducing device 10A to the reproducing device 10B as the need arises, and the screen of the reproducing device 10B is updated as the need arises. Accordingly, the user can operate the reproducing device 10B to thereby perform extensive presentations in the same manner as when directly operating the reproducing device 10A.

Simultaneously with the remote control, the user can directly operate the reproducing device 10A to perform the reproduction (main output) of an arbitrary audio file saved in the internal and/or external storage medium 30 of the reproducing device 10A. Accordingly, desired presentations can be performed by causing the mixer 32 to switch or mix the main output from the reproducing device 10A and the sub-output from the reproducing device 10B.

To end the remote control mode, the user inputs the end of the remote control by depressing the key for ending the remote control of the reproducing device 10A (Step S17). The reproducing device 10A sends a disconnection request command to the reproducing device 10B, and the reproducing device 10B returns a disconnection request response. When the connection is disconnected, the reproducing device 10A performs end display (Step S18), and the reproducing device 10B ends the display of the remote-control screen (Step S25).

As described above, the reproducing device 10 according to the above-mentioned embodiment is provided with the two system audio outputs, and can perform the reproduction (sub-output) of the audio file performed under the remote control substantially simultaneously with the reproduction (main output) of the audio file performed by the direct operation.

This configuration allows the audio files (library) saved in the internal and/or external storage medium 30 of the reproducing device 10 to be shared with another reproducing device. Accordingly, the user no longer needs to replace the removable storage media in each of which desired files are saved between the two reproducing devices 10 for each performance, or to prepare storage media to which the same files are copied one from another in advance. Further, the same storage medium 30 can be used, and hence the user can centrally manage the data, which realizes high convenience.

Further, an identical audio file stored in the identical storage medium 30 can be reproduced on the two reproducing devices 10, which enables extensive presentations. In contrast, the files saved in the storage media 30 connected to the respective reproducing devices 10 can be used by any one of the reproducing devices 10, which enhances convenience for the user.

Further, the user only has to connect the two output systems of the reproducing device 10 according to this embodiment to the mixer 32 and connect the reproducing device 10 to the reproducing device on a controlling end. Therefore, wiring is much simpler than in a configuration provided with a hub that connects the two reproducing devices to the external storage medium. In addition, a special hub or the like is not used, and the reproducing device 10 itself can be manufactured at a relatively low cost.

The present invention is not limited to the above-mentioned embodiment, and various changes, modifications, additions, and the like that are obvious to one skilled in the art can be made.

In the above-mentioned embodiment, the outputs of the two systems are generated from one DSP 18. However, two DSPs 18 may be provided for generating the main output and the sub-output separately. In addition, memories 16 independent of each other may be provided for the respective outputs.

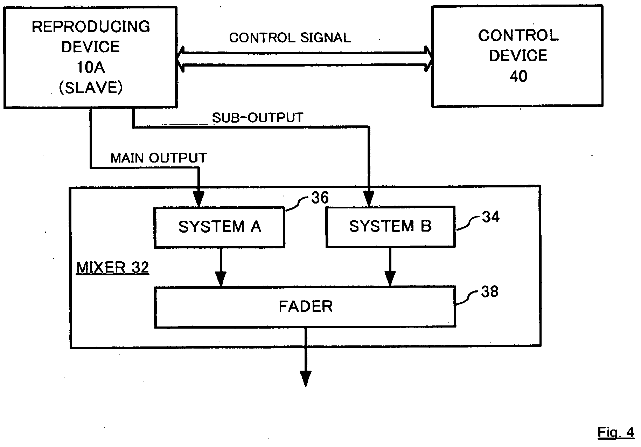

In the above-mentioned embodiment, the reproducing device 10 is configured to be remotely controlled by another reproducing device. However, as illustrated in FIG. 4, the reproducing device 10 may be controlled by a dedicated control device 40. The control device 40 may be like an operation panel obtained by excluding the reproducing section 14 from the reproducing device 10, or may be configured by removing the storage medium 13 from the reproducing device 10. By providing such a dedicated control device 40 as a discrete device, the user can build a reproduction system at a lower cost.

Further, as the control device 40, a personal computer including dedicated software may be used. Such software displays a graphical user interface (GUI) on a screen of the personal computer, and the user remotely controls the reproducing device 10 through a mouse, a keyboard, and the like.

In the above-mentioned embodiment, the slave is configured to generate the image information, but the master may generate the image information based on information transferred from the slave.

The above-mentioned embodiment is described with regard to the case of applying the present invention to the audio files. However, the present invention can be applied preferably to a case of processing video data as well. That is, the outputs of the two systems can be realized by remote control with regard to a moving picture file library saved in the storage medium 30 of one reproducing device 10. Even if a data rate of a moving picture file is high, the reproducing device 10 according to this embodiment transfers only the control signal and does not transfer the file data, which can realize a stable operation sensation without a transfer waiting time at low costs irrespective of the data rate of the file.

The detailed description above is a mere example of the present invention, and it can be easily understood by one skilled in the art that many modifications can be made in the exemplary embodiment without greatly departing from the novel disclosure and the advantages of the present invention. Hence, all such modifications are intended to be included within the scope of the present invention.

### Industrial Applicability

The present invention is extremely useful for the reproducing device for reproducing a file stored in the storage medium.

## Claims

1. A first reproducing device (10, 10A), comprising:
a reproducing section (14) for reproducing an audio or moving picture file stored in a storage medium (30);
a memory (16) for temporarily accumulating data of the audio or moving picture file to be reproduced by the reproducing section (14);
an operating section (26) for receiving an operation input from a user;
a main output section (20) for outputting the data read from the memory (16) based on the operation input received by the operating section (26) to a first system (36) of a mixer (32);
a control interface section (28) for receiving a control signal from a second reproducing device (10B) having the same configuration as the first reproducing device (10, 10A); and
a sub-output section (22) for outputting the data read from the memory (16) based on the control signal received by the control interface section (28) to a second system (34) of a mixer (32);
wherein the first reproducing device (10, 10A) is configured so that, if the control interface section (28) is connected to a second reproducing device (10B) having the same configuration as the first reproducing device (10, 10A), either one of the first and second reproducing devices (10, 10A, 10B) can be used to remotely control the other of the first and second reproducing devices (10, 10A, 10B).

2. A first reproducing device according to claim 1, wherein the storage medium includes an internal storage medium.

3. A first reproducing device according to claim 1 or 2, wherein the storage medium includes an external storage medium.

4. An apparatus comprising a first reproducing device (10, 10A) according to any one of the previous claims and a second reproducing device (10B) having the same configuration as the first reproducing device (10, 10A), wherein the control interface section (28) of the first reproducing device is connected to the second reproducing device (10B) so that either one of the first and second reproducing devices (10, 10A, 10B) can be used to remotely control the other of the first and second reproducing devices (10, 10A, 10B).

5. An apparatus according to claim 4 further comprising a mixer (32), wherein the main output section (20) of the first reproducing device (10, 10A) is connected to a first system (34) of the mixer (32) and the sub-output section (22) of the first reproducing device (10, 10A) is connected to a second system (36) of the mixer (32) so that, in use, the data output from the main output section (20) of the first reproducing device (10, 10A) and the data output from the sub-output section (22) of the first reproducing device are respectively output to the first and second systems (34, 36) of the mixer (32).

6. A reproducing method using a first reproducing device according to claim 1, comprising:
reproducing, in the reproducing section (14), an audio or moving picture file stored in the storage medium;
temporarily accumulating, in the memory (16), data of the audio or moving picture file to be reproduced; and
outputting from the main output section (20) the data read from the memory (16) based on an operation input received from a user at the operating section (26); and
outputting from the sub-output section (22) the data read from the memory (16) based on a control signal received from a second reproducing device (10B) having the same configuration as the first reproducing device (10, 10A) at the control interface section (28).

## Patentansprüche

1. Erste Wiedergabeeinrichtung (10, 10A), umfassend:
einen Wiedergabeabschnitt (14) zum Wiedergeben einer in einem Speichermedium (30) gespeicherten Audio- oder Bewegtbilddatei;
einen Speicher (16) zum vorübergehenden Speichern von Daten der vom Wiedergabeabschnitt (14) wiederzugebenden Audio- oder Bewegtbilddatei;
einen Bedienabschnitt (26) zum Empfangen einer Bedieneingabe von einem Benutzer;
einen Hauptausgabeabschnitt (20) zum Ausgeben der aus dem Speicher (16) ausgelesenen Daten basierend auf der vom Bedienabschnitt (26) empfangenen Bedieneingabe an ein erstes System (36) eines Mischers (32);
einen Steuerschnittstellenabschnitt (28) zum Empfangen eines Steuersignals von einer zweiten Wiedergabeeinrichtung (10B) mit der gleichen Konfiguration wie die erste Wiedergabeeinrichtung (10, 10A); und
einen Unterausgabeabschnitt (22) zum Ausgeben der aus dem Speicher (16) ausgelesenen Daten basierend auf dem vom Steuerschnittstellenabschnitt (28) empfangenen Steuersignal an ein zweites System (34) eines Mischers (32);
wobei die erste Wiedergabeeinrichtung (10, 10A) derart konfiguriert ist, dass, wenn der Steuerschnittstellenabschnitt (28) mit einer zweiten Wiedergabeeinrichtung (10B) mit der gleichen Konfiguration wie die erste Wiedergabeeinrichtung (10, 10A) verbunden ist, eine beliebige aus der ersten und zweiten Wiedergabeeinrichtung (10, 10A, 10B) zum Fernsteuern der anderen aus der ersten und zweiten Wiedergabeeinrichtung (10, 10A, 10B) verwendbar ist.

2. Erste Wiedergabeeinrichtung nach Anspruch 1, wobei das Speichermedium ein internes Speichermedium umfasst.

3. Erste Wiedergabeeinrichtung nach Anspruch 1 oder 2, wobei das Speichermedium ein externes Speichermedium umfasst.

4. Vorrichtung, umfassend eine erste Wiedergabeeinrichtung (10, 10A) nach einem der vorangehenden Ansprüche und eine zweite Wiedergabeeinrichtung (10B) mit der gleichen Konfiguration wie die erste Wiedergabeeinrichtung (10, 10A), wobei der Steuerschnittstellenabschnitt (28) der ersten Wiedergabeeinrichtung mit der zweiten Wiedergabeeinrichtung (10B) derart verbunden ist, dass eine beliebige aus der ersten und zweiten Wiedergabeeinrichtung (10, 10A, 10B) zum Fernsteuern der anderen aus der ersten und zweiten Wiedergabeeinrichtung (10, 10A, 10B) verwendbar ist.

5. Vorrichtung nach Anspruch 4, ferner umfassend einen Mischer (32), wobei der Hauptausgabeabschnitt (20) der ersten Wiedergabeeinrichtung (10, 10A) mit einem ersten System (34) des Mischers (32) verbunden ist und der Unterausgabeabschnitt (22) der ersten Wiedergabeeinrichtung (10, 10A) mit einem zweiten System (36) des Mischers (32) verbunden ist, sodass bei Verwendung die vom Hauptausgabeabschnitt (20) der ersten Wiedergabeeinrichtung (10, 10A) ausgegebenen Daten und die vom Unterausgabeabschnitt (22) der ersten Wiedergabeeinrichtung ausgegebenen Daten an das erste bzw. zweite System (34, 36) des Mischers (32) ausgegeben werden.

6. Wiedergabeverfahren unter Verwendung einer ersten Wiedergabeeinrichtung nach Anspruch 1, umfassend:
Wiedergeben einer im Speichermedium gespeicherten Audio- oder Bewegtbilddatei in dem Wiedergabeabschnitt (14);
vorübergehendes Speichern von Daten der wiederzugebenden Audio- oder Bewegtbilddatei in dem Speicher (16); und
Ausgeben der aus dem Speicher (16) ausgelesenen Daten vom Hauptausgabeabschnitt (20) basierend auf einer von einem Benutzer am Bedienabschnitt (26) empfangenen Bedieneingabe; und
Ausgeben der aus dem Speicher (16) ausgelesenen Daten vom Unterausgabeabschnitt (22) basierend auf einem von einer zweiten Wiedergabeeinrichtung (10B) mit der gleichen Konfiguration wie die erste Wiedergabeeinrichtung (10, 10A) am Steuerschnittstellenabschnitt (28) empfangenen Steuersignal.

## Revendications

1. Premier dispositif de reproduction (10, 10A), comprenant:
une partie de reproduction (14) permettant la reproduction d'un fichier audio ou vidéo stocké sur un support de stockage (30);
une mémoire (16) permettant l'accumulation temporaire des données du fichier audio ou vidéo pour reproduction par la partie de reproduction (14);
une partie d'exploitation (26) permettant la réception d'une entrée d'exploitation de la part d'un utilisateur ;
une partie de sortie principale (20) permettant de sortir les données lues à partir de la mémoire (16) en fonction de l'entrée d'exploitation reçue par la partie exploitation (26) vers un premier système (36) d'une console de mixage (32) ;
une partie d'interface de commande (28) permettant la réception d'un signal de commande à partir d'un second dispositif de reproduction (10B) ayant la même configuration que le premier dispositif de reproduction (10, 10A); et
une partie de sortie auxiliaire (22) permettant de sortir les données lues à partir de la mémoire (16) en fonction de l'entrée d'exploitation reçue par la partie d'interface de commande (28) vers un second système (34) d'une console de mixage (32) ;
où le premier dispositif de reproduction (10, 10A) est configuré de sorte que, si la partie d'interface de commande (28) est connectée à un second dispositif de reproduction (10B) ayant la même configuration que le premier dispositif de reproduction (10, 10A), on peut utiliser l'un du premier dispositif de reproduction et du second dispositif de reproduction (10, 10A, 10B) pour la commande à distance de l'autre du premier dispositif de reproduction et du second dispositif de reproduction (10, 10A, 10B).

2. Premier dispositif de reproduction selon la revendication 1, où le support de stockage comprend un support de stockage interne.

3. Premier dispositif de reproduction selon la revendication 1 ou la revendication 2, où le support de stockage comprend un support de stockage externe.

4. Appareil comprenant un premier dispositif de reproduction (10, 10A) selon l'une quelconque des revendications précédentes et un second dispositif de reproduction (10B) ayant la même configuration que le premier dispositif de reproduction (10, 10A), où la partie d'interface de commande (28) du premier dispositif de reproduction est connecté au second dispositif de reproduction (10B) de sorte que l'on peut utiliser l'un du premier dispositif de reproduction et du second dispositif de reproduction (10, 10A, 10B) pour la commande à distance de l'autre du premier dispositif de reproduction et du second dispositif de reproduction (10, 10A, 10B).

5. Appareil selon la revendication 4 comprenant également une console de mixage (32), où la partie de sortie principale (20) du premier dispositif de reproduction (10, 10A) est connectée à un premier système (34) de la console de mixage (32) et la partie de sortie auxiliaire (22) du premier dispositif de reproduction (10, 10A) est connectée à un second système (36) de la console de mixage (32) de sorte qu'en service la sortie de données en provenance de la partie de sortie principale (20) du premier dispositif de reproduction (10, 10A) et la sortie de données en provenance de la partie de sortie auxiliaire (22) du premier dispositif de reproduction sont respectivement une sortie vers le premier système et le second système (34, 36) de la console de mixage (32) .

6. Procédé de reproduction utilisant un premier dispositif de reproduction selon la revendication 1, comprenant:
la reproduction, dans la partie reproduction (14), d'un fichier audio ou vidéo stocké sur le support de stockage;
l'accumulation temporaire, dans la mémoire (16), des données du fichier audio ou vidéo à reproduire; et
la sortie en provenance de la partie de sortie principale (20) des données lues à partir de la mémoire (16) en fonction d'une entrée d'exploitation reçue par un utilisateur au niveau de la partie d'exploitation (26); et
la sortie en provenance de la partie de sortie auxiliaire (22) des données lues à partir de la mémoire (16) en fonction d'un signal de commande reçu depuis un second dispositif de reproduction (10B) ayant la même configuration que le premier dispositif de reproduction (10, 10A) au niveau de la partie d'interface de commande (28).
